**Europäisches Patentamt**

**European Patent Office**

**Office européen des brevets**

(19)

(11) Veröffentlichungsnummer: **0 019 209**

**A1**

(12) ## EUROPÄISCHE PATENTANMELDUNG

(21) Anmeldenummer: **80102501.6**

(22) Anmeldetag: **07.05.80**

(51) Int. Cl.³: **A 01 B 39/18**

(30) Priorität: **07.05.79 IT 8493779**

(43) Veröffentlichungstag der Anmeldung:
**26.11.80 Patentblatt 80/24**

(84) Benannte Vertragsstaaten:
**CH DE FR IT LI**

(71) Anmelder: **Olivieri, Oliviero**

**I-37060 Casteldazzano(IT)**

(72) Erfinder: **Olivieri, Oliviero**

**I-37060 Casteldazzano(IT)**

(74) Vertreter: **Strehl, Peter K.L. Schiff, Dr. A.v. Füner et al,
Dipl. Ing. P. Strehl Dr. U. Schübel-Hopf Dipl. Ing.
D.Ebbinghaus Dr. Ing. D. Finck Patentanwälte
Mariahilfplatz 2&3
D-8000 München 90(DE)**

(54) **Reihen-Hackmaschine.**

(57) Eine Hackmaschine zum Auflockern des Erdreichs zwischen in Reihen ausgerichteten Pflanzen weist an verschwenkbaren Hebeln (f) angebrachte Klingen (e) auf. Die Hebel (f) lassen sich mittels Druckluftzylindern (g) derart auseinanderschwenken, daß eine Beschädigung der Pflanzen vermieden wird. Die Druckluftzylinder (g) werden dabei von einer Bedienungsperson durch Knopfdruck am hinteren Ende einer die Hebel (f) führenden Steuerstange (c) beaufschlagt. Die Verwendung schnell ansprechender Druckluft-Betätigungseinrichtungen macht es möglich, daß das Erdreich bis in dichtem Abstand an die Pflanzen heran gehackt wird. Anstelle manueller Bedienung können die Führung der Vorrichtung längs den Pflanzenreihen und die Betätigung der Druckluftzylinder auch über mechanische und/oder optische Fühler gesteuert werden.

EP 0 019 209 A1

./...

Croydon Printing Company Ltd.

fig. 2

0019209

Reihen-Hackmaschine

Das Hacken eines bepflanzten Bodens, bei dem die Pflanzen in Reihen ausgerichtet und in Abständen voneinander angeordnet sind, erfolgt in zwei unterschiedlichen Vorgängen. Der eine Vorgang, nämlich das maschinelle Bearbeiten des Erdstreifens zwischen den jeweils benachbarten Pflanzenreihen, stellt keinerlei Schwierigkeit dar, während der andere Vorgang, d.h. das Hacken des Erdreichs zwischen den Pflanzen der gleichen Reihe dann, wenn es mechanisch durchgeführt wird, Probleme mit sich bringt, die unter Verwendung spezieller Hackmaschinen gelöst werden.

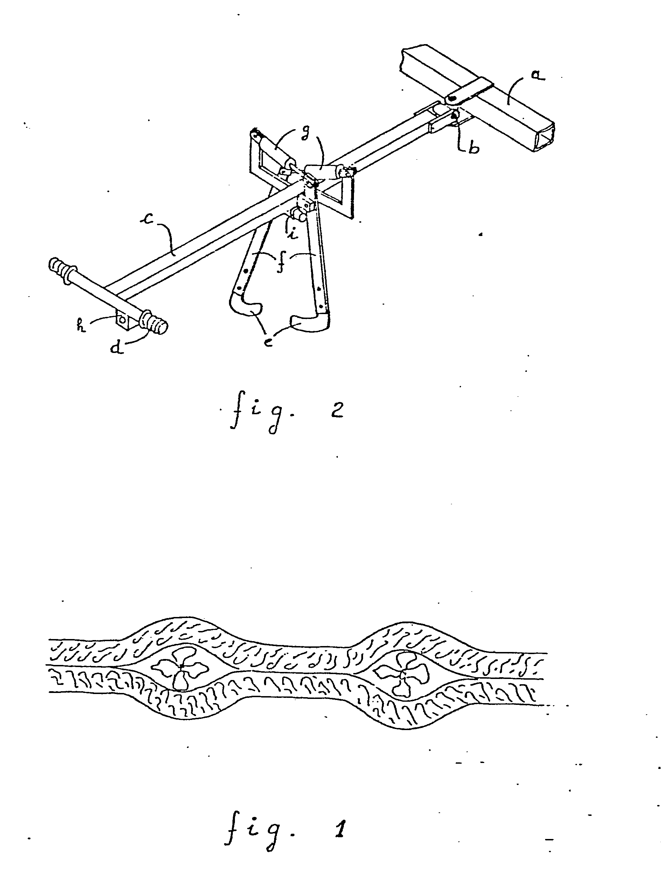

Derartige im Handel befindliche Hackmaschinen arbeiten gewöhnlich mit einer Anordnung von zwei am festen Rahmen der Maschine angelenkten Hebeln, die von Hand betätigt werden. Die gesamte Anordnung ist an einem Aufbau angebracht, der an einem Traktor oder einem sonstigen motorisch betriebenen Ackergerät angehängt oder befestigt ist. Normalerweise arbeiten die Hacken nebeneinander längs der imaginären Achse der Pflanzenreihe; in dem Moment, in dem sie durch die Bewegung des Zugfahrzeugs in der Nähe der Pflanze ankommen, werden sie mittels der Hebel von der Bedienungsperson derart betätigt, daß zwischen ihnen ein Abstand entsteht. Die umgekehrte Bewegung erfolgt, sobald die Maschine an der Pflanze vorbeibewegt ist (vgl. Figur 1). Auf diese Weise bildet sich um die Pflanze herum eine Insel aus nicht umgearbeiteter Erde, während die Erde zwischen den einzelnen Pflanzen umgearbeitet wird.

Diese Arbeit den ganzen Tag lang immer wieder manuell auszuführen ist sehr anstregend.

Der Erfindung liegt die Aufgabe zugrunde, eine Maschine zu schaffen, die die Arbeit der Bedienungsperson erleichtert oder gar ein Eingreifen einer Bedienungsperson erübrigt.

Dazu verwendet die Erfindung anstelle von zwei Stangen nur eine Stange, an der gegenläufig und einander kompensierend arbeitende Druckluftvorrichtungen angebracht sind. Außer einer Erleichterung der physischen Anstrengung bringt die Erfindung den Vorteil einer Beschleunigung der Bewegungen mit sich, weshalb näher an den Pflanzen gearbeitet werden und die Zugmaschine mit höherer Geschwindigkeit fahren kann.

Grundsätzlich wäre es denkbar, anstelle der genannten Druckluftvorrichtungen hydraulische Betätigungseinrichtungen zu verwenden. Aufgrund ihrer geringen Ansprechgeschwindigkeit sind jedoch hydraulisch wirkende Einrichtungen mit Schwierigkeiten behaftet. Um eine Beschädigung der Pflanzen aufgrund des langsamen Ansprechens solcher hydraulischen Betätigungseinrichtungen zu vermeiden, müssten sie verhältnismäßig lange vorher geöffnet werden, was aus Sicherheitsgründen dazu führen würde, daß ein mehr oder weniger langes Bodenstück vor jeder Pflanze nicht bearbeitet wird. Da ferner auch der Schließvorgang verzögert ist, würde auch hinter jeder Pflanze ein unbearbeitetes Stück verbleiben.

Soll die Mitwirkung der Bedienungsperson ganz ausgeschaltet werden, so ist es auch möglich, die Stange nicht von der Bedienungsperson führen zu lassen, sondern durch eine Betätigungseinrichtung derart zu bewegen, daß sie auf der imaginären Achse der zu hackenden Pflanzenreihe gehalten wird, wobei die Betätigungseinrichtung durch Fühler geführt wird. In diesem Fall ist es nicht einmal erforderlich, die die Hacken tragende Stange am Rahmen der Zugmaschine anzulenken. Vielmehr kann die Stange als bewegbarer Träger ausgestaltet sein, der an zwei seine Querbewegung gestattenden Führungen derart läuft, daß er seine Achse stets entsprechend der imaginären Achse der Pflanzenreihe beibehält.

Um die Betätigung der die Hacken bewegenden Druckluftvorrichtungen zu steuern, kann eine Detektoreinrichtung eingesetzt werden, die mit von den erstgenannten Fühlern unabhängigen weiteren Fühlern, fotoelektrisch oder in sonstiger Weise arbeitet.

Ferner kann die Hackenanordnung von einer kleinen Fräse mit vertikaler Achse gebildet sein, die vorzugsweise durch einen Hydraulikmotor betrieben wird.

Bevorzugte Ausführungsbeispiele der Erfindung werden nachstehend anhand der Zeichnungen näher erläutert, in denen

Figur 1, auf die oben schon Bezug genommen wurde, eine Draufsicht auf eine bereits bearbeitete Pflanzenreihe zeigt, während

Figur 2 bis 4 drei verschiedene Ausführungsformen der erfindungsgemäßen Reihenhackmaschine darstellen.

Gemäß Figur 2 weist ein Ausführungsbeispiel der erfindungsgemäßen Hackenanordnung eine Stange c auf, die nicht starr, beispielsweise mittels eines Kardangelenkes b, mit dem Rahmen a einer Maschine verbunden ist, so daß sich das andere, freie Ende der Stange bewegen kann.

Richtung und Tiefe werden von der Bedienungsperson von Hand gesteuert, wobei die Stange c mittels eines vorzugsweise als Lenkstange ausgebildeten Handgriffs d geführt wird.

Die Auseinanderbewegung der Hacken mittels an der Stange c angelenkten Hebeln f wird jedoch einem doppelt-wirkenden Druckluftzylinder g überlassen. Statt direkt mit zwei Stangen zu arbeiten, hat die Bedienungsperson lediglich eine Taste oder ein Hebelchen eines Luftverteilers h zur Beaufschlagung des Druckluftzylinders zu betätigen. Geeignete Endschalter und Dämpfer i steuern die Auslenkung der die Hacken e tragenden Hebel f.

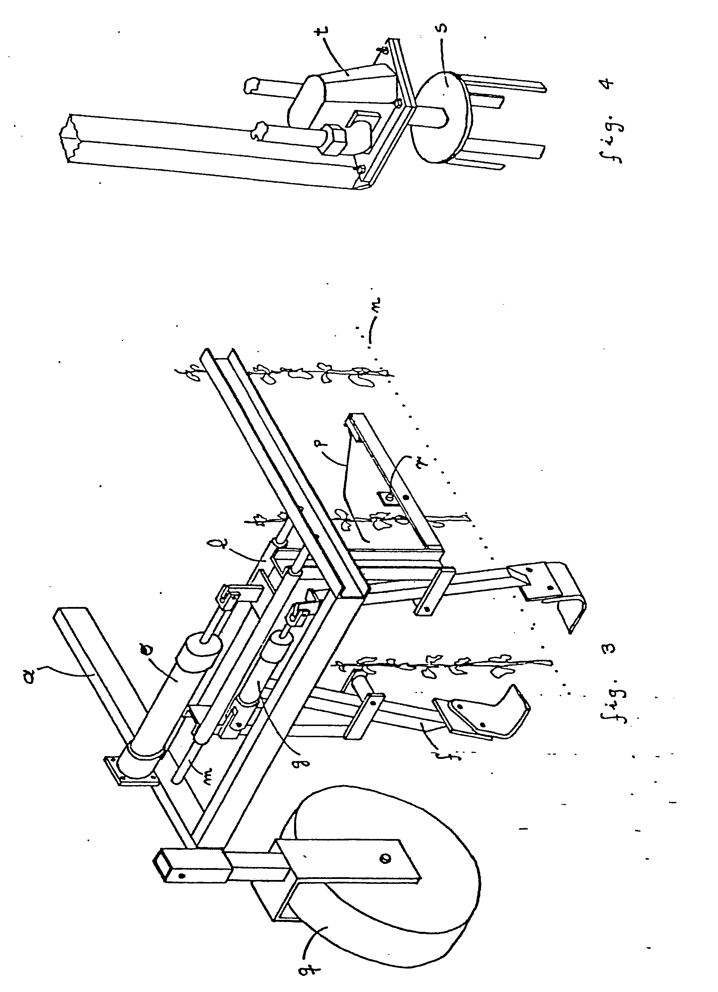

Gemäß Figur 3 ist bei einer vollständig automatisierten Hackmaschine die die Hacken tragende Stange durch einen auf Führungsschienen m laufenden Schlitten l ersetzt. (Bei der in Figur 3 gezeigten Ausführung weist der Schlitten l zwei Rohre auf, die längs zweier die Führungsschienen m bildenden festen Rundprofilen verschiebbar sind; statt einer derartigen Schlittenanordnung können jedoch auch andere Mechanismen verwendet werden.)

Die Zentrierung des Schlittens l bezüglich der imaginären Achse n der Pflanzenreihe erfolgt durch einen doppelt wirkenden Druckluftzylinder o, der durch zwei zu beiden Seiten der Pflanzenreihe angeordnete Fühler p gesteuert wird. (In Figur 3 ist zur größeren Klarheit nur ein Fühler p dargestellt.) Berührt einer der Fühler p eine Pflanze, so steuert er die Beaufschlagung des Druckluftzylinders o derart, daß die Achse der Vorrichtung auf die Achse n der Pflanzenreihe zurückgeführt wird.

Die Steuerbefehle zum Öffnen der Hacken werden wiederum auf Druckluftzylinder g gegeben, welche die die Hacken tragenden Hebel f betätigen. Die Hacktiefe wird durch ein auf dem Boden laufendes Rad q geregelt, dessen Höhe bezüglich der Hacken nach Bedarf regulierbar ist.

Die Spreizbewegung der Hacken wird durch eine Fotozelle r gesteuert, die an einer Seite der Maschine angebracht ist und ein Lichtsignal von einem auf der anderen Seite symmetrisch angeordneten Sender empfängt. Unterbricht eine Pflanze beim Vorwärtsbewegen der Maschine den Lichtstrahl, so werden die Hacken auseinanderbewegt. Ein einstellbares Verzögerungsglied beliebiger Bauart steuert dabei das Zusammenführen der Hacken, sobald sich die Maschine an der Pflanze vorbeibewegt hat.

Die Fühler p und die Fotozelle r sind verschiebbar am Rahmen der Vorrichtung angebracht, um eine ordnungsgemäße Betätigung der Maschine in Abhängigkeit von den verschiedenen Pflanzen zu erreichen, bei denen der Hackvorgang ausgeführt werden soll.

Gemäß Figur 4 wird der Erdboden statt mit der festen Hacke mit einer um eine vertikale Achse drehbaren kleinen Fräse s bearbeitet, die vorzugsweise von einem Hydraulikmotor t betrieben wird.

Patentansprüche

1. Reihen-Hackmaschine, g e k e n n z e i c h n e t durch zwei bewegbare Hacken (e), die an an einem gemeinsamen Träger (c, 1) angelenkten Hebeln (f) angebracht sind.

2. Hackmaschine nach Anspruch 1, dadurch g e k e n n - z e i c h n e t , daß die die Hacken (e) tragenden Hebel (f) durch Druckluftzylinder (g) auseinander und aufeinander zu bewegbar sind.

3. Hackmaschine nach Anspruch 1 oder 2, dadurch g e - k e n n z e i c h n e t , daß der Träger eine an ihrem einen Ende mit einem Fahrzeug derart bewegbar verbundene Steuerstange (c) umfaßt, daß sie sich durch Handhabung ihres anderen freien Endes von einer Bedienungsperson in vertikaler und seitlicher Richtung verschwenken läßt.

4. Hackmaschine nach Anspruch 3, dadurch g e k e n n - z e i c h n e t , daß das freie Ende der Steuerstange (c) Handgriffe (d) und ein Betätigungsorgan (h) zur Steuerung der Druckluftzylinder (g) aufweist.

5. Hackmaschine nach einem der Ansprüche 1 bis 4, dadurch g e k e n n z e i c h n e t , daß die die Hacken (e) tragenden Hebel (f) im wesentlichen in der Mitte zwischen den beiden Enden der Steuerstange (c) angelenkt und quer zu die- ser verschwenkbar sind.

0019209

6. Hackmaschine nach Anspruch 1 oder 2, dadurch g e -
k e n n z e i c h n e t , daß der Träger (1) längs an
einem Maschinenrahmen (a) befestigten Führungen (m) verschiebbar und durch eine von Fühlern (p) steuerbare Betätigungseinrichtung (o) bewegbar ist.

7. Hackmaschine nach Anspruch 6, dadurch g e k e n n -
z e i c h n e t , daß die Betätigung der Druckluftzylinder
(g) durch eine die Pflanzen abtastende Detektoreinrichtung
(r) steuerbar sind.

8. Hackmaschine nach Anspruch 7, dadurch g e k e n n -
z e i c h n e t , daß die Detektoreinrichtung eine Fotozelle (r) umfaßt.

9. Hackmaschine nach einem der vorhergehenden Ansprüche,
dadurch g e k e n n z e i c h n e t , daß die Hacken
feste Klingen (e) und/oder bewegbare Organe (s) aufweisen.

10. Hackmaschine nach Anspruch 9, dadurch g e k e n n -
z e i c h n e t , daß die bewegbaren Organe als von einem
Hydraulikmotor (t) betriebene Fräsen (s) ausgebildet sind.

PS/Ug

fig. 2

fig. 1

fig. 3

fig. 4

0019209

**Europäisches Patentamt**

**EUROPÄISCHER RECHERCHENBERICHT**

Nummer der Anmeldung

EP 80 10 2501

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>DE - C - 370 895</u> (BRADFISCH)<br>* Seite 1, Zeilen 1-50; Seite 2, Zeilen 1-96; Figuren 1-8 * | 1,3,5, 6,9 |
| P | <u>US - A - 4 183 413</u> (BOSTON)<br>* Spalte 1, Zeilen 20-26; 56-68; Spalte 2, Zeilen 1-68; Spalte 3, Zeilen 1-28; Figuren 1-3 * | 2,9 |
| | <u>FR - A - 1 229 767</u> (LAS GOUTE)<br>* Seite 2; Ansprüche; Figuren 1-3 * | 9 |
| X | <u>NL - A - 69 10279</u> (VERPLANKE)<br>* Seite 2, Zeilen 20-32; Seite 3, Zeilen 2-36; Seite 4, Zeilen 1-36; Seite 5, Zeilen 1-20; Figuren 1,2 * | 1,7,9 |
| | <u>CH - A - 249 565</u> (ETABL. LABINAL)<br>* Seite 2, Zeilen 1-96; Seite 3, Zeilen 1-96; Seite 4, Zeilen 1-95; Seite 5, Zeilen 1-70; Figuren 1-6 * | 6,7,9 |
| | <u>US - A - 3 202 224</u> (McELHOME)<br>* Spalte 1, Zeilen 37-72; Spalte 2, Zeilen 1-50; Figuren 1,2 * | 1,2,9 |
| | <u>GB - A - 1 265 438</u> (THE EVERSMAN MFG COMPANY)<br>./. | 2,7,8, 9 |

**KLASSIFIKATION DER ANMELDUNG (Int Cl ³,**

A 01 B 39/18

**RECHERCHIERTE SACHGEBIETE (Int. Cl. ³)**

A 01 B

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 01-08-1980 | VERDOODT |

EPA form 1503.1  06.78

| Europäisches Patentamt | **EUROPÄISCHER RECHERCHENBERICHT** | | |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | * Seite 2, Zeilen 55-130; Seite 3, Zeilen 1-130; Seite 4, Zeilen 1-130; Seite 5, Zeilen 1-55; Figuren 1-5 * | |
| | -- | |
| | DE - E - 1 101 841 (EHLERT) | 9 |
| | * Spalte 8; Ansprüche 1,2,4; Figuren 1-5,8,9 * | |
| | -- | |
| | FR - E - 89 349 (BOEUF) | 10 |
| | * Seite 2; Ansprüche; Figuren 1,2 * | |
| | ---- | |

**KLASSIFIKATION DER ANMELDUNG (Int.Cl. 3)**

**RECHERCHIERTE SACHGEBIETE (Int. Cl. 3)**